(19) **Europäisches Patentamt**

**European Patent Office**

**Office européen des brevets**

(11) Numéro de publication: **0 237 553**

**B1**

(12) **FASCICULE DE BREVET EUROPEEN**

(45) Date de publication du fascicule du brevet: **06.06.90**

(51) Int. Cl.⁵: **F 16 B 12/00, A 47 B 47/04**

(21) Numéro de dépôt: **86905835.4**

(22) Date de dépôt: **19.09.86**

(86) Numéro de dépót international:
**PCT/FR86/00318**

(87) Numéro de publication internationale:
**WO 87/01771 26.03.87 Gazette 87/07**

---

(54) **DISPOSITIF D'ASSEMBLAGE D'ELEMENTS ET ASSEMBLAGES AINSI OBTENUS.**

---

(30) Priorité: **20.09.85 FR 8514097**

(43) Date de publication de la demande:
**23.09.87 Bulletin 87/39**

(45) Mention de la délivrance du brevet:
**06.06.90 Bulletin 90/23**

(84) Etats contractants désignés:
**AT BE CH DE GB IT LI LU NL SE**

(56) Documents cités:
**FR-A-2 114 709**
**FR-A-2 477 648**

(73) Titulaire: **ROUMAGERE, Louis**
**Bouniagues**
**F-24560 Issigeac (FR)**

(72) Inventeur: **ROUMAGERE, Louis**
**Bouniagues**
**F-24560 Issigeac (FR)**

(74) Mandataire: **Thébault, Jean-Louis**
**Cabinet Thébault S.A. 50 Cours de Verdun**
**F-33000 Bordeaux (FR)**

---

Courier Press, Leamington Spa, England.

## Description

La présente invention a trait à un système d'assemblage d'éléments permettant la réalisation d'assemblages de configurations très diverses notamment de meubles ou constructions en bois.

Le but de l'invention est de proposer un système d'assemblage simple ne nécessitant aucun organe de montage ou fixation ni aucun outil pour la mise en place des divers éléments de la structure à réaliser.

A cet effet, l'invention a pour objet un dispositif d'assemblage d'éléments comprenant une partie dite femelle et une partie dite mâle, conformées chacune sur l'un de deux éléments à assembler, ladite partie femelle comprenant un évidement, cependant que ladite partie mâle comprend une partie destinée à s'emboîter et à pivoter dans ledit évidement, caractérisé en ce que l'évidement de la partie femelle est cylindrique et prolongé latéralement par un évidement d'accès de largeur sensiblement inférieure au diamètre de l'évidement cylindrique et débouchant sur l'un des bords de l'élément à assembler et en ce que ladite partie destinée à s'emboîter et à pivoter dans ledit évidement présente une section de forme allongée définie par un cercle de diamètre très légèrement inférieur à celui dudit évidement femelle cylindrique et tronqué de façon que ladite partie mâle passe librement dans ledit évidement d'accès suivant une trajectoire perpendiculaire à l'axe dudit évidement cylindrique et puisse pivoter dans ce dernier autour de son axe.

Un tel dispositif d'assemblage permet un montage particulièrement simple et rapide de deux éléments ou davantage en vue de réaliser toutes sortes d'assemblages ou constructions, quelles que soient les formes et dimensions desdites éléments et la nature du matériau constitutif (bois, matière plastique, métal, etc.).

En effet, l'engagement de la partie mâle dans la partie femelle se fait instantanément en présentant la partie mâle par sa largeur minimale, puis le verrouillage des deux parties s'effectue par une rotation relative entre la partie mâle et la partie femelle une fois la partie mâle totalement engagée.

D'autre caractéristiques et avantages ressortiront de la description qui va suivre de divers modes de réalisation et applications du dispositif d'assemblage selon l'invention, description donnée à titre d'exemple uniquement et en regard des dessins annexés sur lesquels:

Figure 1 est une vue en perspective de deux éléments de construction munis respectivement d'une partie d'assemblage mâle et d'une partie d'assemblage femelle conformes à l'invention;

Figure 2 illustre une application de l'invention à la réalisation d'une chaise sous forme d'un kit;

Figure 3 illustre une autre application à la réalisation d'égagères multiples;

Figure 4 illustre une autre application à la réalisation d'un banc à lamelles;

Figure 5 illustre encore une autre application à la réalisation d'un portail de jardin, et

Figure 6 représente différentes sections possibles de parties mâles du dispositif de l'invention.

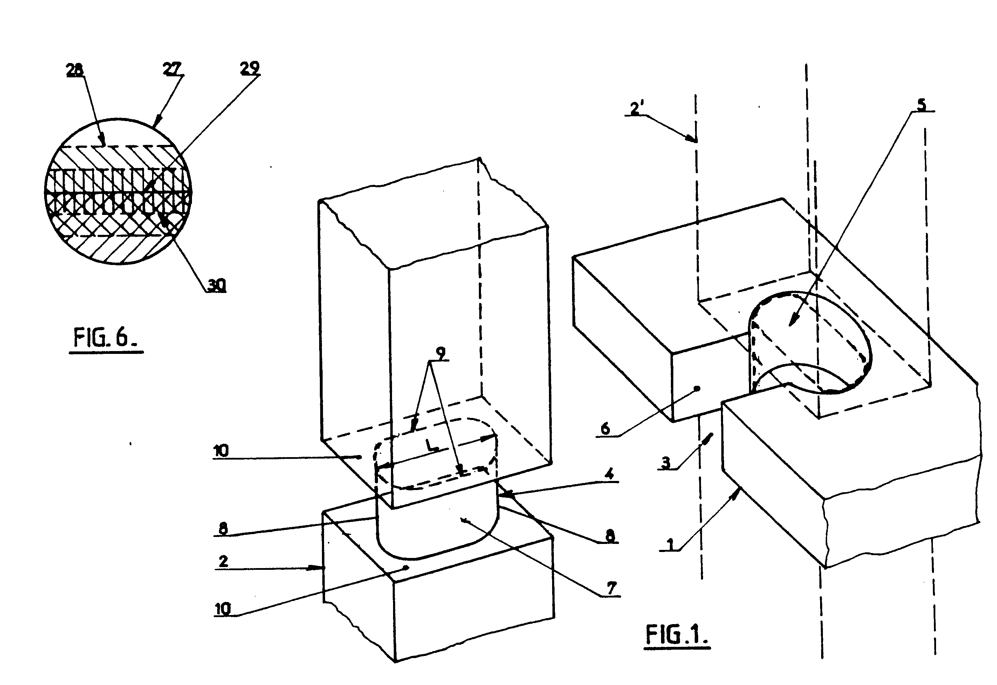

La figure 1 illustre le principe de l'assemblage selon l'invention. On a représenté partiellement deux éléments de construction respectivement 1 et 2, par exemple deux barreaux de bois de section rectangulaire.

L'un de ces éléments (1) comporte une partie d'assemblage dite femelle 3 et l'autre élément (2) comporte une partie d'assemblage dite mâle 4.

La partie femelle 3 comprend un évidement cylindrique 5, par exemple d'axe perpendiculaire au plan du barreau 1, prolongé jusqu'à l'un des bords de ce derrier par une entaille 6 à flancs parallèles de largeur très sensiblement inférieure au diamètre de l'évidement 5. De préférence, l'axe de l'entaille 6 coupe l'axe de la partie cylindrique 5.

La partie mâle 4 est réalisée en entaillant le barreau 2 sur tout son pourtour pour obtenir un tronçon de section réduite 7 de forme allongée et comprenant, plus précisément, deux parties extrêmes 8 arrondies situées sur un même cylindre de diamètre très légèrement inférieur à celui de la partie cylindrique 5. Les deux parties arrondies 8 sont reliées par deux flancs plats parallèles 9 distants d'une largeur très légèrement inférieure à celle de l'entaille 6.

La section réduite 7 set flanquée de deux épaulements parallèles 10 séparés par une distance très légèrement inférieure à l'épaisseur du barreau 1.

L'assemblage par emboîtement des barreaux 1 et 2 est instantané.

Le barreau 2 est présenté avec sa section 7, de plus petite largeur, au droit de l'entaille 6 comme représenté sur la figure 1. L'engagement de la section 7 se fait jusqu'au fond de l'évidement cylindrique 5.

La longueur L de la section 7 étant très légèrement inférieure au diamètre du cylindre 5 et la distance entre les épaulements 10 très légèrement inférieure à l'épaisseur du barreau 1, le barreau 2 peut facilement pivoter de 90° comme représenté en tiretés en 2', par rapport au barreau 1. L'assemblage est ainsi verrouillé, la section 7 présentant sa grande dimension L en regard de l'entaille de dégagement 6 et les épaulements 10 bloquant le barreau 2 axialement.

Les dimensions des parties mâle et femelle sont calculées de façon à avoir un verrouillage relativement ferme par friction.

Plus précisément, il importe que la distance entre les épaulements 10 soit délimitée en fonction de l'épaisseur du barreau 1 de façon à éviter tout jeu axial du barreau 2 sur le barreau 1 et assurer un léger blocage en rotation des deux barreaux évitant un déplacement intempestif ultérieur entre les barreaux sans empêcher un démontage même s'il faut forcer un peu.

Il est est de même des parties arrondies 8 par rapport au cylindre 5, un frottement relativement doux devant exister entre les parties 8 et 5 emboîtées. Par contre, la distance entre les flancs 7 n'est pas critique dans la mesure où elle est inférieure à la largeur de l'entaille 6.

Il est à noter que l'entaille 6 peut déboucher non plus taléralement au barreau 1 mais à son extrémité selon les applications envisagées.

Les évidements 5 et 6 traversent le barreau 1 sur toute son épaisseur mais purraient ne pas le faire et être borgnes, la partie mâle corespondante étant conformée en conséquence. C'est ainsi que dans le mode de réalisation de la figure 1, avec de tels évidements 5 et 6 borgnes, la partie mâle 4 aurait une forme de simple tenon faisant saillie à une extrémité du barreau 2.

Un même élément (1, 2) peut comporter selon les applications plusieurs parties mâles, plusieurs parties femelles ou les deux parties à la fois.

Les formes et dimensions des éléments à assembler peuvent varier dans une très large mesure.

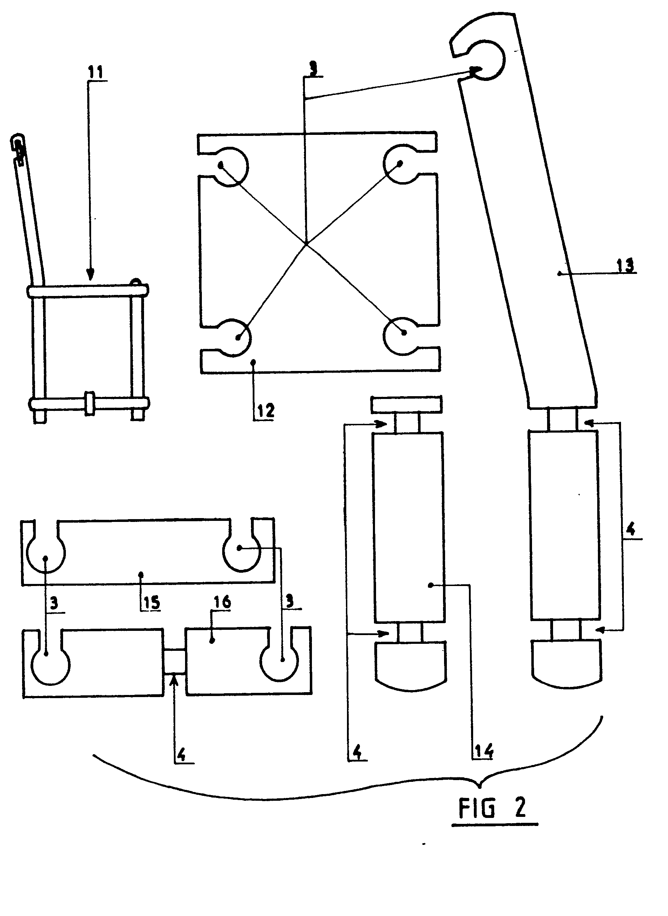

Les figures 2 à 5 illustrent diverses applications de l'invention à la réalisation sous forme de kits de mobiliers ou constructions.

La figure 2 représente les éléments essentiels pour la réalisation d'une chaise 11. Ces éléments comprennent un dessus 12, un pied arrière 13, un pied avant 14, une traverse milieu 15 et une traverse côté 16. Chaque élément comporte une ou plusieurs parties femelles ou mâles identiques aux parties 3 et 4 de la figure 1.

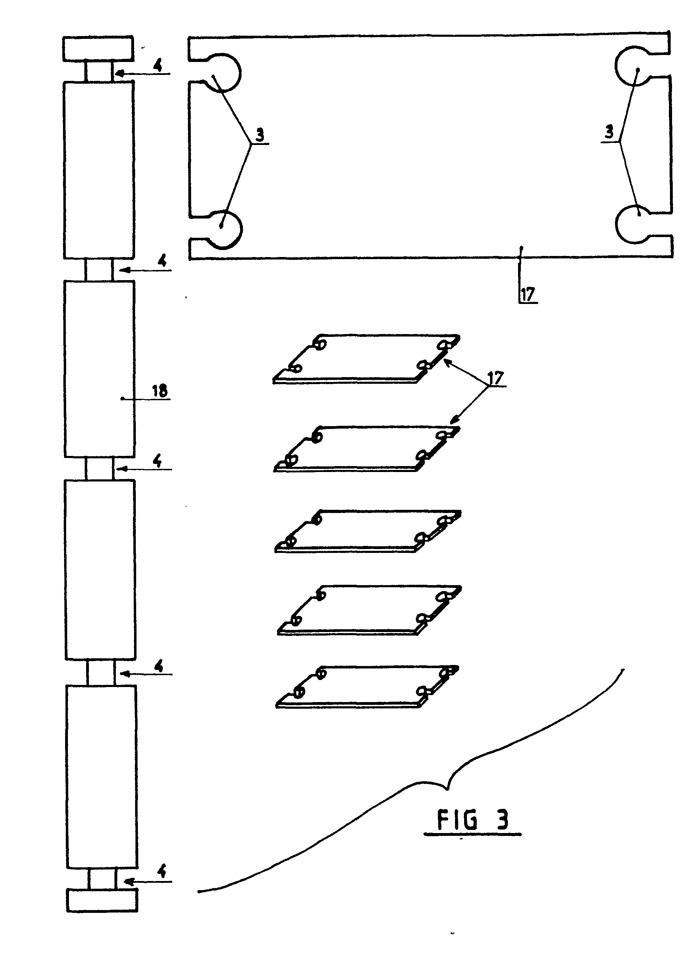

La figure 3 représente les éléments essentiels pour la réalisation d'étagères multiples.

Ces éléments comprennent une étagère 17 à quatre parties femelles 3 et un pied 18 à plusieurs parties mâles 4.

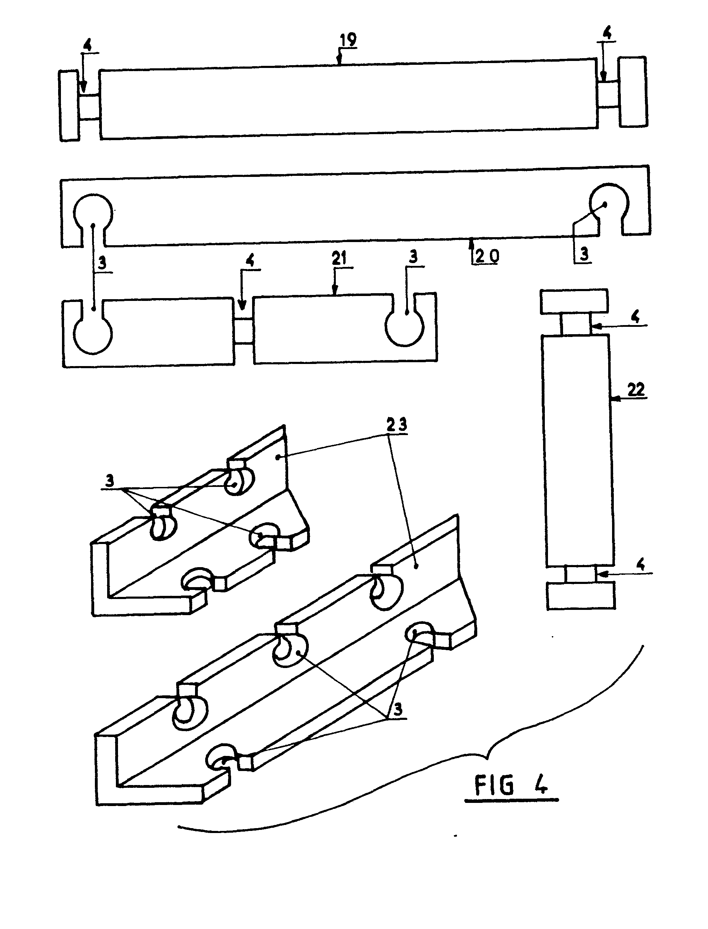

La figure 4 représente les éléments essentiels pour la réalisation d'un banc à lamelles.

Ces éléments comprennent une lame dessus 19, une traverse longueur 20, une traverse côté 21, un pied 22, et des supports pieds et lames dessus 23. Des parties mâles 4 et/ou femelles 3 sont conformées sur les divers éléments.

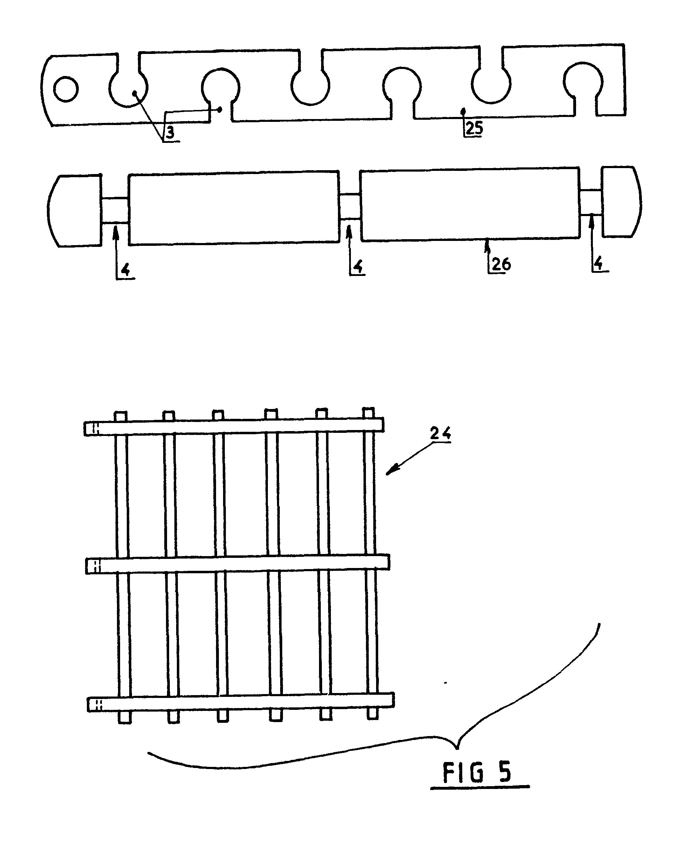

La figure 5 représente les éléments essentiels pour la réalisation d'un portail de jardin 24.

Ces éléments comprennent une traverse 25 et un montant 26 munis chacun de plusieurs parties mâles 4 ou femelles 3.

Ces parties mâles et femelles peuvent avoir d'autres configurations que celles représentées tout en réalisant l'assemblage par le même principe d'engagement mutuel puis rotation à force pour assurer le blocage en position. C'est ainsi que l'entaille 6 d'accès à l'évidement cylindrique 5 peut avoir une configuration différente (flancs non parallèles, non symétriques, déportés latéralement par rapport à l'évidement cylindrique). De même, la partie mâle 4 peut avoir une forme différente comme illustré par la figure 6 qui représente un cercle 27 de diamètre très légèrement inférieur à celui de la partie cylindrique 5. La zone hâchurée 28 représente une section du type utilisé pour la partie mâle 4 de la figure 1. La zone hachurée 29 (demi-cercle) illustre une autre section possible pour les parties mâles.

La zone hâchurée 30 représente encore une autre section possible.

D'autres sections sont bien entendu possibles à l'intérieur du cercle 27 sans sortir pour autant du cadre de l'invention.

Il est à noter que les éléments de construction pouvant recevoir les parties mâles 4 et femelles 3 peuvent avoir des formes très variables (lame de section rectangulaire, montant cylindrique, plaque plane, pièces en équerre telles que 23, etc.).

Avec deux éléments tels que 25 (avec des parties femelles 3 de chaque côté ou d'un même côté), on peut réaliser à l'aide de lames telles que 19 un panneau plein semblable à des clins, chaque lame débordant sur la suivante et pouvant être entaillée sur ses bords longitudinaux de manière à constituer une paroi continue à surface pratiquement lisse.

Les exemples illustrés par les dessins ne sont qu'une infime partie des très nombreuses combinaisons que l'on peut réaliser à partir de divers éléments de base en vue d'obtenir toutes sortes d'objets d'ameublement, de construction, d'aménagement, utilitaires ou décoratifs etc.

## Revendications

1. Dispositif d'assemblage d'éléments comprenant une partie dite femelle (3) et une partie dite mâle (4), conformées chacune sur l'un de deux éléments à assembler (1, 2), ladite partie femelle comprenant un évidement (5), cependant que ladite partie mâle (4) comprend une partie destinée à s'emboîter et à pivoter dans ledit évidement (5), caractérisé en ce que l'évidement (5) de la partie femelle est cylindrique et prolongé latéralement par un évidement d'accès (6) de largeur sensiblement inférieure au diamètre de l'évidement cylindrique (5) et débouchant sur l'un des bords de l'élément à assembler et en ce que ladite partie destinée à s'emboîter et à pivoter dans ledit évidement (5) présente une section (7) de forme allongée définie par un cercle de diamètre (L) très légèrement inférieur à celui dudit évidement femelle cylindrique (5) et tronqué de façon que ladite partie mâle (4) passe librement dans ledit évidement d'accès (6) suivant une trajectoire perpendiculaire à l'axe dudit évidement cylindrique (5) et puisse pivoter dans ce dernier autour de son axe.

2. Dispositif d'assemblage suivant la revendication 1, caractérisé en ce que l'évidement d'accès de la partie femelle est constitué par une entaille (6) à flancs parallèles dont l'axe coupe celui de l'évidement cylindrique (5), cependant que la section (7) de la partie mâle (4) est délimitée par deux parties extrêmes arrondies (8) reliées par deux flancs parallèles (9) séparés par une distance très légèrement inférieure à la largeur de ladite entaille (6).

3. Dispositif d'assemblage suivant la revendication 1 ou 2, caractérisé en ce que la partie mâle (4) constitue une partie de section réduite de l'élément porteur (2), délimitée par deux épaulements (10) parallèles séparés par une distance très légèrement supérieure à l'épaisseur de l'élément (1) porteur de la partie femelle (3).

4. Dispositif d'assemblage suivant l'une des revendications 1 à 3, caractérisé en ce que la section (29) de la partie mâle est un demi-cercle de diamètre très légèrement inférieur à celui de l'évidure cylindrique (5) de la partie femelle (3).

5. Assemblages constitués d'au moins deux éléments (1, 2) en matériau quelconque munis chacun d'au moins l'une des parties femelle (3) et mâle (4) selon l'une quelconque des revendications 1 à 4.

**Patentansprüche**

1. Vorrichtung zum Befestigen von Elementen, umfassend ein sogenanntes weibliches Teil (3) und ein sogenanntes männliches Teil (4), jedes an einem der beiden zu verbindenden Elemente (1, 2) ausgebildet, wobei das weibliche Teil eine Aussparung (5) aufweist, während das männliche Teil (4) einen Abschnitt besitzt, der dazu bestimmt ist, in die Ausnehmung (5) eingesteckt zu werden und sich in dieser zu drehen, dadurch gekennzeichnet, daß die Ausnehmung (5) des weiblichen Teils zylindrisch und seitlich durch eine Zutrittsöffnung (6) einer Breite wesentlich geringer als der Durchmesser der zylindrischen Ausnehmung (5) und an einer der Seiten des zu befestigenden Elements mündend verlängert ist, und daß der zum Einstecken und zum Schwenken in der Ausnehmung (5) bestimmte Abschnitt einen Querschnitt (7) von gestreckter Form aufweist, der durch einen Kreis vom Durchmesser (L) etwas kleiner als derjenige der weiblichen zylindrischen Ausnehmung (5) definiert und derart abgeflacht ist, daß das männliche Teil (4) frei durch die Zutrittsöffnung (6) längs eines Weges senkrecht zur Achse der zylindrischen Ausnehmung (5) führbar ist und sich in letzterer um seine Achse drehen kann.

2. Vorrichtung zum Befestigen nach Anspruch 1, dadurch gekennzeichnet, daß die Zutrittsöffnung des weiblichen Teils von einem Einschnitt (6) mit parallelen Seiten gebildet wird, dessen Achse diejenige der zylindrischen Ausnehmung (5) schneidet, während der Querschnitt (7) des männlichen Teils (4) durch zwei gerundete Endabschnitte (8) begrenzt wird, die durch zwei parallele Seiten (9) miteinander verbunden sind, die um einen Abstand etwas kleiner als die Breite des Einschnitts (6) voneinander getrennt sind.

3. Vorrichtung zum Befestigen nach Anspruch 1 oder 2, dadurch gekennzeichnet, daß das männliche Teil (4) einen Abschnitt mit reduziertem Querschnitt des Trägerelements (2) bildet, der durch zwei parallel, um einen Abstand etwas größer als die Stärke des Trägerelements (1) des weiblichen Teils (3) voneinander getrennte Schultern (10) begrenzt ist.

4. Vorrichtung zum Befestigen nach einem der Ansprüche 1 bis 3, dadurch gekennzeichnet, daß der Querschnitt (29) des männlichen Teils ein Halbkreis mit einem Durchmesser etwas geringer als derjenige der zylindrischen Ausnehmung (5) des weiblichen Teils (3) ist.

5. Verbindungen, gebildet aus wenigstens zwei Elementen (1, 2) aus irgendeinem Material, die jeweils wenigstens mit einem der weiblichen und männlichen Teile (3, 4) gemäß einem der Ansprüche 1 bis 4 versehen sind.

**Claims**

1. Device for assembling units comprising one so-called female part (3) and one so-called male part (4), each formed on one of two units to be assembled (1, 2), the said female part comprising a recess (5), while the said male part (4) comprises a part which is designed to fit into and pivot in the said recess (5), characterized in that the recess (5) of the female part is cylindrical and extended laterally by an access groove (6) which is considerably smaller in diameter than the cylindrical recess (5) and which opens onto one of the edges of the unit to be assembled, and in that the said part designed to fit into and pivot in the said recess (5) has an elongated section (7) defined by a circle, the diameter (L) of which is slightly smaller than that of the said cylindrical female part (5) and cut down in such a way that the said male part (4) can freely enter the said access groove (6) following a direction which is perpendicular to the axis of the said cylindrical recess (5) and can pivot in the latter around its axis.

2. Assembly device as claimed in claim 1, characterized in that the access groove of the female part is formed from a notch (6) with parallel sides, the axis of which intersects that of the cylindrical recess (5), whilst the section (7) of the male part (4) has two rounded ends (8), linked by two parallel sides (9) separated by a distance which is slightly less than the width of the said notch (6).

3. Assembly device as claimed in claims 1 or 2, characterized in that the male part (4) forms a part of reduced section of the supporting unit (2), defined by two parallel shoulders (10) separated by a distance which is slightly greater than the thickness of the unit (1) supporting the female part (3).

4. Assembly device as claimed in one of the claims 1 to 3, characterized in that the section (29) of the male part is a semicircle with a diameter very slightly smaller than that of the cylindrical recess (5) of the female part (3).

5. Assemblies formed from at least two units (1, 2) in any type of material, each equipped with at least one female part (3) and one male part (5) as claimed in any of the claims 1 to 4.

FIG.1.

FIG.6.

FIG 2

2

FIG 3

3

19

4                                                                                              4

3

3                        20                              3

4        21        3

23

3

22

3                                          4

3

FIG 4

4

3

25

4

4

26

4

24

FIG 5